# EUROPÄISCHE PATENTSCHRIFT

(11) **EP 2 163 437 B1**
(45) Veröffentlichungstag und Bekanntmachung des Hinweises auf die Patenterteilung: **30.05.2012**
(21) Anmeldenummer: 09011591.6
(22) Anmeldetag: 10.09.2009
(51) Int. Cl.: B60R 21/215, B60R 13/02, B23K 26/40, C14B 1/14, C14B 5/00

(54) **Abdeckungsteil**
Covering section
Pièce de recouvrement

(30) Priorität: 11.09.2008 AT 14162008
(43) Veröffentlichungstag der Anmeldung: 17.03.2010
(73) Patentinhaber: Prevent Austria GmbH, 3500 Krems / Donau (AT)
(72) Erfinder: Kostler, Ernst, 3542 Jaidhof (AT)
(74) Vertreter: Puchberger, Peter

(56) Entgegenhaltungen:
- EP-A1- 1 380 477
- EP-A2- 0 741 062
- EP-A2- 2 077 208
- DE-A1- 10 352 524

## Beschreibung

Die Erfindung betrifft ein Abdeckungsteil für die Innenverkleidung von Kraftfahrzeugen, insbesondere Airbagabdeckungen, wobei der Abdeckungsteil auf einem Formteil als Träger befestigbar ist und der Abdeckungsteil an seiner Rückseite Schwächungszonen, insbesondere Sollbruchlinien für eine nicht sichtbare Airbag-Austrittsöffnung, aufweist, dadurch gekennzeichnet, dass die Oberfläche des Abdeckungsteiles durch den ungeschwächten Narbenspalt eines Leders gebildet ist, der auf den mit der Schwächungszone ausgebildeten Fleischspalt des Leders zur Ausbildung des Lederteiles aufgeklebt ist.

Darüber hinaus betrifft die Erfindung ein Verfahren zur Abdeckung einer vorgefertigten Sollbruchzone durch Spaltung der Dekorschicht.

Speziell im Bereich belederter Instrumententafeln stellt sich die Herausforderung, einer unter der Dekorschicht liegenden Airbag-Austrittsöffnung durch eine nicht sichtbare Sollbruchstelle freie Funktion garantieren zu können, ohne dabei auf übliche konfektionstechnische Verfahren wie Reißnähte zurückzugreifen. Dies sowohl aus designerischen als auch Prozessgründen. Insbesondere in einer Instrumententafel ist ein höchster Anspruch an Oberflächengüte, Designtreue und Wertigkeit zur Geltung gebracht, da es sich um ein unmittelbar im Blickfeld befindliches Teil mit besonderer psychologischer Wertigkeit für Markenidentität handelt. Die Lösung besteht grundsätzlich darin, dem Dekorverbund eine exakte lokal definierte Schwächung beizubringen, um eine Öffnung des Moduls bei definierter Kraft zu garantieren.

Diese Einbringung von Sollbruchstellen findet wie ausführlich in vielen Dokumenten belegt durch mechanische oder optische Verfahren wie Laser, Stanzen, Fräsen etc statt.

Die DE 102005055553 A1 offenbart ein Verfahren zur Schwächung des Dekormaterials durch eindringende, aber diese nicht durchdringende Ausnehmungen als linienförmige Anordnung von Sacklöchern. Die Schwächung soll zeitnah, vorzugsweise gleichzeitig erfolgen. In der DE 000010227118 A1 wird mittels Laserstrahlung eine Reihe von Sacklöchern sowohl in das Trägermaterial, als auch durchgehend durch die Schaumstoffschicht in die Dekorschicht erzeugt. Ein weiteres Verfahren, basierend auf Laserbearbeitung, findet sich in DE 102005015094 A1. Allen diesen Verfahren ist gemein, dass eine oder mehrere Schichten gemeinsam bearbeitet werden, wobei die eigentliche Dekorschicht rückseitig eigens- oder mitbearbeitet wird. Dies wirft Probleme in der zuverlässigen Steuerbarkeit der Verfahren auf, die insbesondere bei Schaumunterfütterungen und Leder auftreten, da es sich in beiden Fällen um in ihrer Mikrostruktur sehr inhomogene Materialien handelt. Die DE 103 52 524 A1 zeigt ein Abdeckungsteil mit den Merkmalen des Oberbegriffs des Anspruchs 1.

Es tritt durch den Bearbeitungsschritt an der Dekorschicht im Regelfall eine ungewollte weitere Schwächung in Form von Zugbelastungen oder thermischen Auswirkungen auf, die im Alterungsprozess des Produktes eine vorzeitige Sichtbarkeit der Sollbruchlinien bewirken, was wiederum als störend und deutlich wertmindernd empfunden wird.

Der Erfindung liegt die Aufgabe zugrunde, ein Abdeckungsteil mit Lederdekor und einer Schwächungszone für eine Airbag-Austrittsöffnung in Kraftfahrzeugen sowie ein Verfahren zu dessen Herstellung bereitzustellen, welches die vorzeitige Sichtbarkeit der Sollbruchlinien im Laufe des Alterungsprozesses verhindert.

Diese Aufgabe wird durch das Abdeckungsteil mit den Merkmalen der Ansprüche 1 bis 6 sowie dem Verfahren mit den Merkmalen der Ansprüche 7 bis 11 gelöst. Vorteilhafte Ausgestaltungen der Erfindung sind auch der Beschreibung und den Zeichnungen entnehmbar.

Die dem Betrachter zugewandte Seite des Lederdekors wird bestmöglich vor der Einbringung der Sollbruchstelle geschützt, indem es vor der Bearbeitung (Perforation) in einen Narbenspalt und einen Fleischspalt gespalten wird. Der Narbenspalt wird vor Schwächungen durch die Bearbeitung geschützt, während die Sollbruchstelle in dem Fleischspalt nun mit jedem Einbringungsverfahren in hoher Geschwindigkeit eingebracht werden kann, was somit eine höhere Produktionsgeschwindigkeit bei gleichzeitig verbesserter Prozesssicherheit bewirkt.

Nachfolgend werden der ungeschwächte Narbenspalt und der perforierte Fleischspalt wieder deckungsgleich verklebt, vorzugsweise mit Zweikomponentendispersionskleber oder Reaktivkleber mit hoher Wärmebeständigkeit. Durch die Verklebung des Werkstoffes mit sich selbst kann eine entsprechende Festigkeit und Alterungsstabilität erreicht werden, um eine Funktion auch unter Langzeitbedingungen zu garantieren. Bei vollflächiger Verklebung tritt zusätzlich ein positiver Effekt durch Stützung der Sollbruchstelle in unbelastetem Zustand ein.

Im Endzustand liegt der Dekorzuschnitt in unveränderten Dimensionen und Stärken zum Ausgangszustand zur Weiterverarbeitung vor, dessen Oberfläche aufgrund geringerer Bearbeitungsbelastung eine erhöhte Standfestigkeit gegenüber Materialermüdungserscheinungen aufweist.

Die Erfindung wird nun anhand der Figuren 1 bis 5 näher beschrieben.
Fig. 1 zeigt einen Schnitt durch die Echtlederhaut.
Fig. 2 zeigt eine Perforationslinie.
Fig. 3 zeigt eine Aufsicht auf den Schichtaufbau des Abdeckungsteiles.
Fig. 4 zeigt einen Schnitt durch das Abdeckungsteil quer zur Schwächungszone.
Fig. 5 zeigt eine Aufsicht auf ein erfindungsgemäß bearbeitetes Armaturenbrett für ein Kraftfahrzeug.

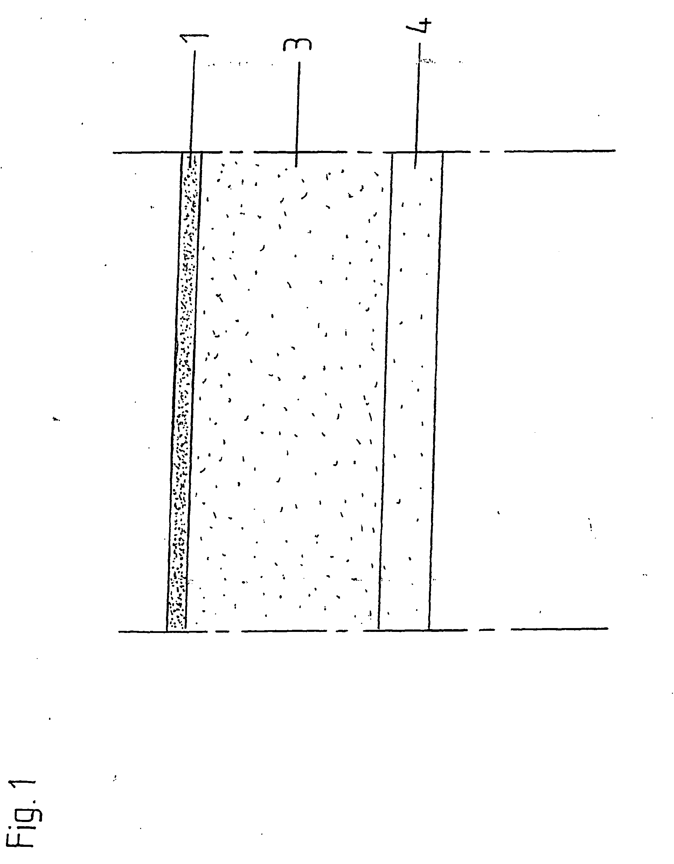

Die in Figur 1 gezeigte Echtlederhaut besteht in der obersten Schicht aus dem Narbenspalt 1 (Oberhaut) welcher sich direkt auf dem darunter liegenden Fleischspalt 3 (Lederhaut) befindet welcher über der Unterhaut 4 liegt.

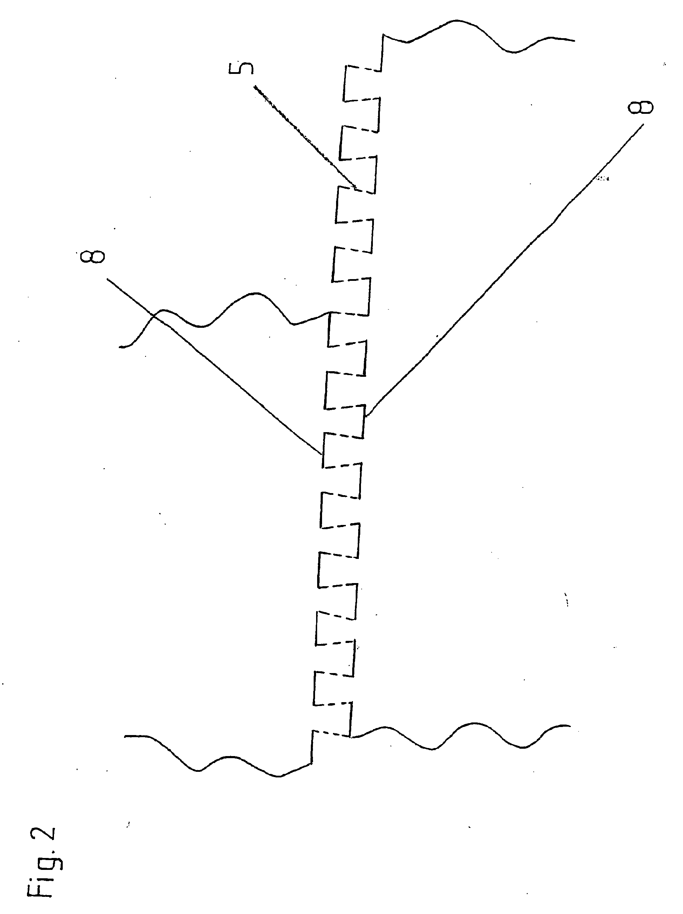

Eine mustergemäße Perforationslinie dargestellt in Figur 2 weist neben den Perforationsschnitten 8, welche sich vorzugsweise im Abstand von 1 mm (Einschnittlänge 2 mm) befinden, auch Aufrisslinien 5 auf, an denen sich das geschwächte Material lösen kann.

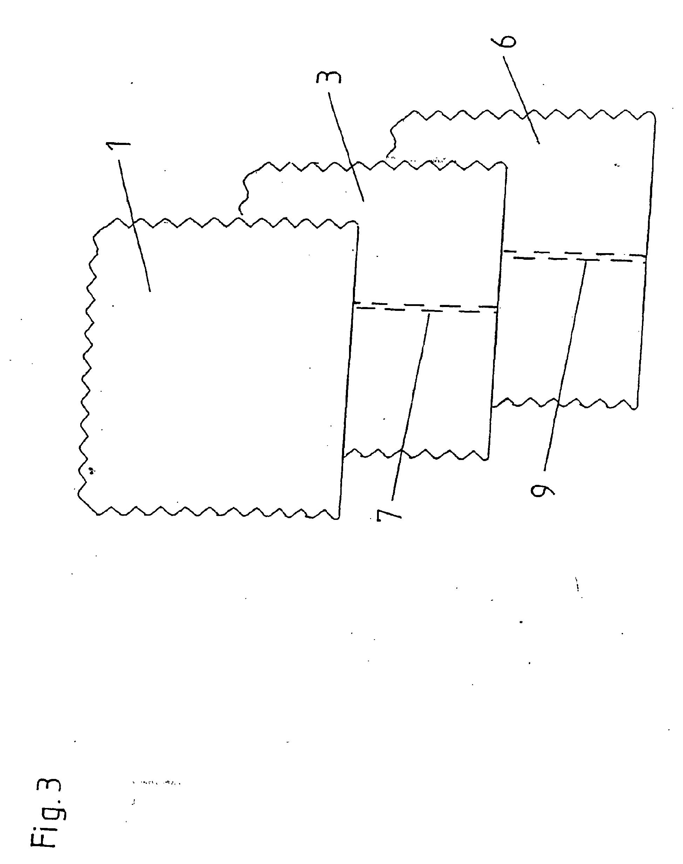

Fig. 3 lässt den Aufbau der einzelnen Schichten in einer Aufsicht erkennen. Der Narbenspalt 1, befindet sich deckungsgleich über dem Fleischspalt 3, welcher wiederum über der Polsterschicht 6 liegt. Die Fleischspaltperforation 7 und die Polsterschichtperforation 9, bestehend aus jeweils zwei parallelen versetzten Perforationslinien, bevorzugt im Abstand von etwa 1,0 mm (Einschnittlänge 2 mm), bilden die von außen nicht sichtbaren Sollbruchlinien, die den Durchbruch des nicht eingezeichneten Airbags ermöglichen.

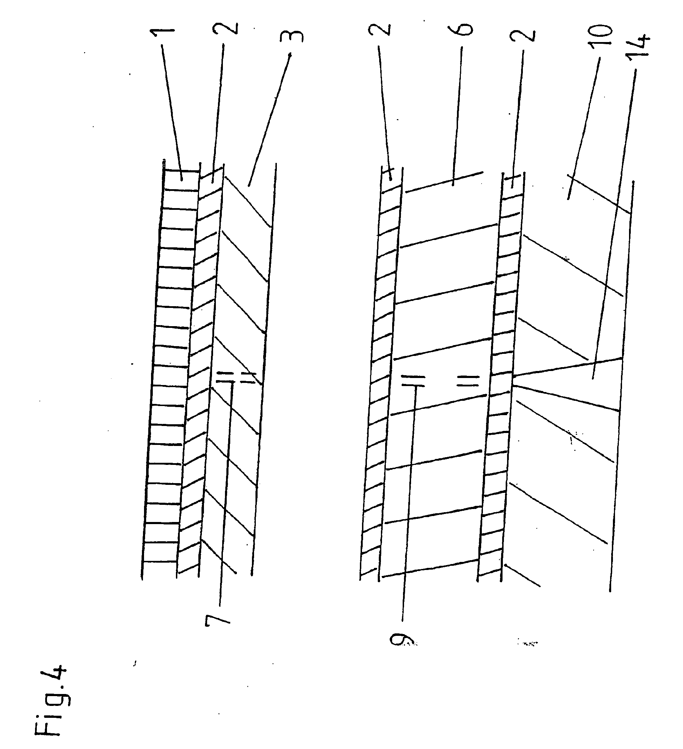

Aus dem Schnitt durch das Abdeckungsteil nach Fig. 4 ist ersichtlich, dass das Abdeckungsteil auf einem dickwandigen Formteil als Träger 10 mittels Klebstoff 2 verklebt ist. Der Träger 10 weist die Sollbruchstelle 14 auf, an der der Abdeckungsteil im Fall der Auslösung des (nicht dargestellten) Airbags aufbrechen soll. Auf die Schicht des Klebers 2 folgt eine Polsterschicht 6, bevorzugt aus Kunststoffschaum oder Abstandsgewirke, auf der jeweils mit Kleber 2 der Fleischspalt 3, welcher bevorzugt eine Dicke von 0,3 bis 5,0 mm aufweist, und der Narbenspalt 1, welcher bevorzugt eine Dicke von 0,3 bis 1,0 mm aufweist, folgen. Die einzelnen Schichten sind, vorzugsweise mit Zweikomponentendispersionskleber oder Reaktivkleber mit hoher Wärmebeständigkeit deckungsgleich, verklebt, wobei die Klebeschichten an den Schwächungszonen durchgehend sein können. Zwischen dem Trägerteil und dem Dekor ist nicht zwingend eine Schicht aus einem anderen Material notwendig. Die partielle Schwächung weist keine flächige Dickenschwächung auf, daher muss sie nicht mit einem anderen Material zusätzlich ausgestaltet werden.

Die Schichtdicken in Fig. 4 sind nicht maßstäblich und teilweise überhöht.

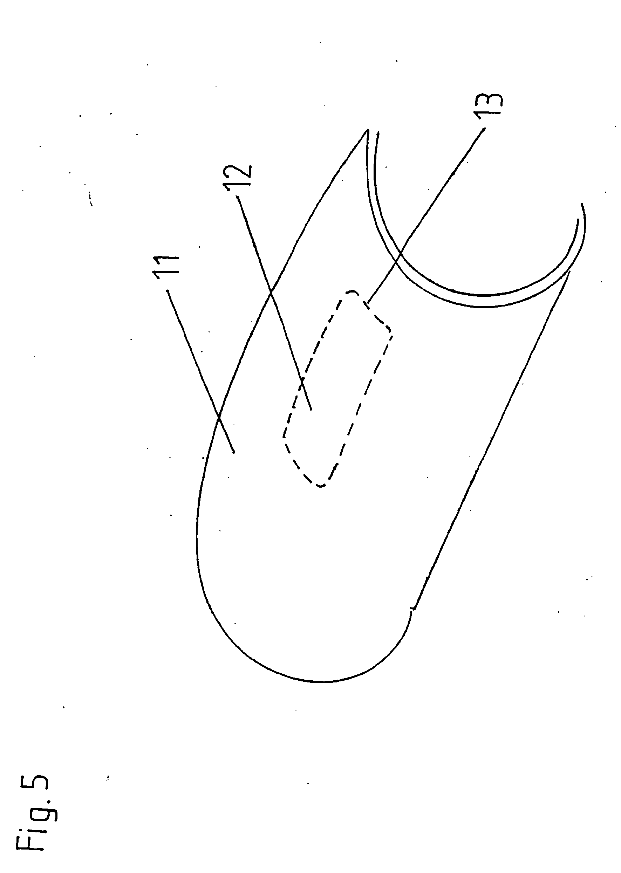

Das in Fig. 5 dargestellte Armaturenbrett 11 ist beifahrerseitig mit einer Airbag-Austrittsöffnung 12 ausgestattet, die durch ein Abdeckungsteil mit einer Schwächungszone 13 in Form einer Sollbruchlinie umgrenzt wird. Die Schwächungszone ist vom Kraftfahrzeugsinnenraum her nicht sichtbar, so dass die Airbag-Austrittsöffnung als solche vor der Entfaltung nicht erkennbar ist.

Alle Zeichnungen sind schematisch gehalten und schränken die Erfindung nicht ein.

### Bezugszeichenliste:

- 1: Narbenspalt (Oberhaut)
- 2: Klebstoff
- 3: Fleischspalt (Lederhaut)
- 4: Unterhaut
- 5: Aufreißlinie
- 6: Polsterschicht
- 7: Fleischspaltperforation
- 8: Perforationslinie
- 9: Polsterschichtperforation
- 10: Trägermaterial
- 11: Armaturenbrett
- 12: Airbag-Austrittsöffnung
- 13: Schwächungszone
- 14: Sollbruchstelle (Trägerteil)
- 15: Kraftfahrzeugsinnenraum

## Patentansprüche

1. Abdeckungsteil für die Innenverkleidung von Kraftfahrzeugen, insbesondere Airbagabdeckungen, wobei der Abdeckungsteil auf einem Formteil als Träger (10) befestigbar ist und der Abdeckungsteil an seiner Rückseite Schwächungszonen, insbesondere Sollbruchlinien für eine nicht sichtbare Airbag-Austrittsöffnung, aufweist, wobei die Oberfläche des Abdeckungsteiles durch den ungeschwächten Narbenspalt (1) eines Leders gebildet ist, **dadurch gekennzeichnet, dass** der Narbenspalt auf den mit der Schwächungszone ausgebildeten Fleischspalt (3) des Leders zur Ausbildung des Lederteiles aufgeklebt ist.

2. Abdeckungsteil nach Anspruch 1, **dadurch gekennzeichnet, dass** der Lederteil mit einer ebenfalls die Schwächungszone aufweisenden Polsterschicht (6), bevorzugt aus Kunststoffschaum oder Abstandsgewirke, verklebt ist.

3. Abdeckungsteil nach Anspruch 1 und 2, **dadurch gekennzeichnet, dass** der Narbenspalt (1) eine Dicke von 0,3 bis 1,0 mm und der Fleischspalt (3) eine Dicke von 0,3 bis 5,0 mm aufweist.

4. Abdeckungsteil gemäß einem der Ansprüche 1 bis 3, **dadurch gekennzeichnet, dass** die Lederschwächungszone durch Perforation des Fleischspaltes (3) und gegebenenfalls der Polsterschicht (6) gebildet wird.

5. Abdeckungsteil gemäß Anspruch 4, **dadurch gekennzeichnet, dass** der Fleischspalt (3) und gegebenenfalls die Polsterschicht (6) mit zumindest einer Perforationslinie (7, 9) mit Versatz bevorzugt im Abstand von etwa 1,0 mm, bevorzugt mit einer Einschnittlänge von 2 mm versehen ist.

6. Abdeckungsteil gemäß einem der Ansprüche 1 bis 5, **dadurch gekennzeichnet, dass** die Klebeschichten (2) an den Schwächungszonen unterbrochen sind.

7. Verfahren zur Erzeugung eines Abdeckungsteiles gemäß einem der Ansprüche 1 bis 6 mit einer Schwächungszone, insbesondere nicht sichtbarer Sollbruchlinien für eine Airbag-Austrittsöffnung, in einem sichtseitig mit einem Lederteil ausgestatteten Träger, **dadurch gekennzeichnet, dass** das Lederteil vor der Bearbeitung in zumindest den Narbenspalt (1) und einen Fleischspalt (3) gespalten wird und nach erfolgter Bearbeitung wieder zusammengefügt wird.

8. Verfahren gemäß Anspruch 7, **dadurch gekennzeichnet, dass** das Lederteil für die Bearbeitung in einen der Spezifikation und erforderlichen Festigkeit entsprechenden Narbenspalt (1) mit einer Dicke von 0,3 bis 1,0 mm sowie zumindest einen Fleischspalt (3) mit einer Dicke von 0,3 bis 5,0 mm gespalten wird.

9. Verfahren nach Anspruch 7 und 8, **dadurch gekennzeichnet, dass** der mindestens eine Fleischspalt (3) ohne Rücksichtnahme auf die Eigenschaften des Narbenspaltes (1) mit den mustergemäßen Perforationslinien (7) versehen wird.

10. Verfahren gemäß einem der Ansprüche 7 bis 9, **dadurch gekennzeichnet, dass** der Narbenspalt (1) und der mindestens eine Fleischspalt (3) wieder deckungsgleich verklebt werden.

11. Verfahren gemäß einem der Ansprüche 7 bis 10, **dadurch gekennzeichnet, dass** die Verklebung vorzugsweise mit Zweikomponentendispersionskleber oder Reaktivkleber mit hoher Wärmestandfestigkeit erfolgt.

## Claims

1. Cover part for the interior trim of motor vehicles, especially airbag covers, wherein the cover part can be fixed to a moulded part as support (10) and the cover part has on its rear side weakened zones, especially predetermined rupture lines for an invisible airbag outlet opening, wherein the surface of the cover part is formed by the unweakened grain split (1) of a leather, **characterised in that** the grain split is adhesively bonded to the flesh split (3) of the leather provided with the weakened zone in order to form the leather part.

2. Cover part according to claim 1, **characterised in that** the leather part is adhesively bonded to a cushioning layer (6), preferably made of plastics foam or spacer fabrics, which likewise has the weakened zone.

3. Cover part according to claim 1 and 2, **characterised in that** the grain split (1) has a thickness of from 0.3 to 1.0 mm and the flesh split (3) has a thickness of from 0.3 to 5.0 mm.

4. Cover part according to any one of claims 1 to 3, **characterised in that** the leather weakened zone is formed by perforating the flesh split (3) and optionally the cushioning layer (6).

5. Cover part according to claim 4, **characterised in that** the flesh split (3) and optionally the cushioning layer (6) is provided with at least one perforation line (7, 9) with a stagger of preferably approximately 1.0 mm, preferably with a length of cut of 2 mm.

6. Cover part according to any one of claims 1 to 5, **characterised in that** the adhesive layers (2) are broken at the weakened zones.

7. Process for the production of a cover part according to any one of claims 1 to 6 having a weakened zone, especially an invisible predetermined rupture line for an airbag outlet opening, in a support provided on the visible side with a leather part, **characterised in that** the leather part, before it is processed, is split into at least the grain split (1) and a flesh split (3) and, when processing has been carried out, is joined together again.

8. Process according to claim 7, **characterised in that** the leather part, for processing, is split into a grain split (1) having a thickness of from 0.3 to 1.0 mm and corresponding to the specification and required strength and at least one flesh split (3) having a thickness of from 0.3 to 5.0 mm.

9. Process according to claim 7 and 8, **characterised in that** the at least one flesh split (3) is provided with the pattern of perforation lines (7) without consideration of the properties of the grain split (1).

10. Process according to any one of claims 7 to 9, **characterised in that** the grain split (1) and the at least one flesh split (3) are adhesively bonded together again congruently.

11. Process according to any one of claims 7 to 10, **characterised in that** the adhesive bonding is carried out preferably using two-component dispersion adhesives or reactive adhesives with high heat resistance.

## Revendications

1. Elément de recouvrement pour l'habillage intérieur de véhicules automobiles, en particulier couvercles de coussins gonflables, l'élément de recouvrement pouvant être fixé sur une pièce moulée, en tant que support (10), et l'élément de recouvrement présentant sur sa face arrière des zones affaiblies, en particulier des lignes destinées à la rupture pour une ouverture invisible de sortie de coussin gonflable, la surface de l'élément de recouvrement étant constituée de la fleur (1) non affaiblie d'un cuir, **caractérisé en ce que** la fleur est collée sur la croûte (3) du cuir réalisée avec la zone affaiblie, en vue de former l'élément en cuir.

2. Elément de recouvrement selon la revendication 1, **caractérisé en ce que** la pièce en cuir est collée sur une couche de rembourrage (6), constituée de préférence de matière plastique expansée ou d'une structure d'espacement à mailles, présentant également la zone affaiblie.

3. Elément de recouvrement selon la revendication 1 et 2, **caractérisé en ce que** la fleur (1) présente une épaisseur comprise entre 0,3 et 1,0 mm et la croûte (3) présente une épaisseur comprise entre 0,3 et 5,0 mm.

4. Elément de recouvrement selon une des revendications 1 à 3, **caractérisé en ce que** la zone d'affaiblissement du cuir est formée par la perforation de la croûte (3) et, le cas échéant, de la couche de rembourrage (6).

5. Elément de recouvrement selon la revendication 4, **caractérisé en ce que** la croûte (3) et, le cas échéant, la couche de rembourrage (6) sont pourvues d'au moins une ligne de perforation (7, 9), avec un décalage correspondant de préférence à environ 1,0 mm, de préférence avec une longueur d'incision de 2 mm.

6. Elément de recouvrement selon une des revendications 1 à 5, **caractérisé en ce que** les couches adhésives (2) sont interrompues dans les zones affaiblies.

7. Procédé de fabrication d'un élément de recouvrement selon une des revendications 1 à 6, comprenant une zone affaiblie, notamment des lignes non visibles destinées à la rupture pour une ouverture de sortie de coussin gonflable, dans un support muni d'une pièce en cuir sur sa face visible, **caractérisé en ce que**, avant le traitement, la pièce en cuir est refendue pour obtenir au moins la fleur (1) et une croûte (3), puis est de nouveau assemblée une fois le traitement effectué.

8. Procédé selon la revendication 7, **caractérisé en ce que**, pour le traitement, la pièce de cuir est refendue pour obtenir une fleur (1) correspondant aux spécifications et à la résistance requise, d'une épaisseur comprise entre 0,3 et 1,0 mm, et au moins une croûte (3) d'une épaisseur comprise entre 0,3 et 5,0 mm.

9. Procédé selon les revendications 7 et 8, **caractérisé en ce que** la croûte (3), au nombre d'au moins une, est pourvue des lignes de perforation (7) conformes au motif, sans tenir compte des propriétés de la fleur (1).

10. Procédé selon une des revendications 7 à 9, **caractérisé en ce que** la fleur (1) et la croûte (3), au nombre d'au moins une, sont recollées de manière à coïncider l'une avec l'autre.

11. Procédé selon une des revendications 7 à 10, **caractérisé en ce que** le collage est réalisé de préférence avec une colle à dispersion à deux composants ou une colle réactive à haute résistance au fluage à chaud.
